(19) Europäisches Patentamt / European Patent Office / Office européen des brevets

(11) **EP 2 076 382 B1**

## (12) EUROPEAN PATENT SPECIFICATION

(45) Date of publication and mention
of the grant of the patent:
**13.12.2017 Bulletin 2017/50**

(21) Application number: **07815144.6**

(22) Date of filing: **11.10.2007**

(51) Int Cl.:
**B32B 5/00** [(2006.01)]

(86) International application number:
**PCT/AT2007/000477**

(87) International publication number:
**WO 2008/049142 (02.05.2008 Gazette 2008/18)**

(54) **INSULATING MATERIAL**

ISOLIERENDES MATERIAL

MATÉRIAU ISOLANT

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **25.10.2006 AT 18012006**

(43) Date of publication of application:
**08.07.2009 Bulletin 2009/28**

(73) Proprietor: **LENZING AKTIENGESELLSCHAFT
4860 Lenzing (AT)**

(72) Inventors:
• **SUCHOMEL, Friedrich
4860 Lenzing (AT)**
• **MÄNNER, Johann
4852 Weyregg (AT)**
• **FIRGO, Heinrich
4840 Vöcklabruck (AT)**

(74) Representative: **Nemec, Harald et al
Schwarz & Partner
Patentanwälte
Wipplingerstrasse 30
1010 Wien (AT)**

(56) References cited:
**WO-A1-2007/034204    US-A1- 2005 014 433**

• **Johann Männer ET AL: "Higher Performance with
Natural Intelligence", Lenzinger Berichte, 1
January 2004 (2004-01-01), pages 99-110,
XP055058141, Retrieved from the Internet:
URL:http://www.lenzing.com/fileadmin/templ
ate/pdf/konzern/lenzinger_berichte/ausgabe
_83_2004/LB_2004_Maenner_15_ev.pdf
[retrieved on 2013-03-28]**
• **Christian K. Schuster ET AL: "Home Textiles With
Feel Good Factor Derived From Wood",
Lenzinger Berichte, 1 January 2004 (2004-01-01),
pages 111-116, XP055058142, Retrieved from the
Internet:
URL:http://www.lenzing.com/fileadmin/templ
ate/pdf/konzern/lenzinger_berichte/ausgabe
_83_2004/LB_2004_Schuster_16_ev.pdf
[retrieved on 2013-03-28]**
• **Jintu Fan ET AL: "An experimental investigation
of moisture absorption and condensation in
fibrous insulations under low temperature",
Experimental Thermal and Fluid Science, vol. 27,
no. 6, 1 July 2003 (2003-07-01), pages 723-729,
XP055058114, ISSN: 0894-1777, DOI:
10.1016/S0894-1777(02)00305-9**

## Description

The present invention relates to an insulating material.

The term "insulating material" encompasses broadly all materials used to isolate a zone with a higher temperature from a zone with a lower temperature, such as especially filling material for duvets, pillows, sleeping bags, mattresses, filling materials for coating, such as for ski and winter wear; layers in sports clothing, or also thermal insulations in buildings and industrial applications.

Insulating materials commonly comprise a first surface and a second surface, said first surface, when in use, being in contact with a first zone having a first temperature and a first absolute humidity, and said second surface, when in use, being in contact with a second zone having a second temperature which is lower than the first temperature, and a second absolute humidity, which may be different from said first absolute humidity (especially if one thinks of bedding materials such as duvets).

It is known to produce insulating materials of the above-mentioned kind from bulky nonwoven articles, which are also called "highloft" nonwoven articles. Holiday, Th.M., "Highloft Nonwovens Handbook" INDA, 1989, generally describes the basic properties of highloft nonwoven articles useful also for insulation purposes.

As a "highloft" material, for the purposes of the present invention, one understands a material exhibiting a low density of typically from 5 to 25 kg/m$^3$.

The properties of insulating materials with regard to the absorption of moisture are quite important. Especially, this holds true for bedding articles such as duvets, pillows and the like. When sleeping, the body sweats and the moisture thereby formed in the inner side of the duvet should be transported off through the duvet in vapour form. If, during the transport of the moisture, the temperature sinks below the dewpoint because of the existing difference between the temperature at the inner side of the duvet and the outside temperature, the moisture may condense. This results in a moist feeling of the duvet, which is highly undesirable.

The same principle holds, of course, true also for clothing articles in general, and, especially, for sportswear. Furthermore, condensation effects may also limit the efficiency of insulating materials in buildings or industrial applications.

Therefore, hygroscopic fibres, such as cellulose fibres, which are able to absorb moisture, are often used in insulating materials to avoid the negative effects of moisture condensation in the inside of said materials. Furthermore, for various reasons it is known to use nonwoven blends of non-hygroscopic fibres, such as Polyester fibres, and hygroscopic fibres, such as cellulose fibres, as filling materials, especially for bedding. WO 99/16705, for example, discloses the use of a nonwoven blend of Polyester fibres and Lyocell fibres as a filling material, for example for duvets and pillows. DE 44 45 085 A1 discloses the use of a non-woven blend of Polyester fibres and Ramie fibres for the same purpose. The use of a non-woven blend of Polyester fibres and Viscose fibres for the same purpose is known from EP 1 067 227.

Also the document "Processing trials with lyocell fibers using the stitch-bonding technique" by W. Fritsche in Melliand International (2) 1997, p. 80 ff., discloses nonwoven materials comprising Polyester and/or Lyocell fibres.

It is an object of the present invention to provide an insulating material wherein potential problems resulting of condensation effects in the inside of the material can be avoided or at least reduced, whilst on the other hand the breathability or ability of the material to transport off moisture stays essentially the same.

This object is solved by an insulating material comprising a first surface and a second surface, said first surface, when in use, being in contact with a first zone having a first temperature and a first absolute humidity, and said second surface, when in use, being in contact with a second zone having a second temperature which is lower than the first temperature and having a second absolute humidity which may be different from said first absolute humidity, said material comprising a first layer of an essentially non-hygroscopic fibre material and a second layer of an essentially hygroscopic fibre material, said first layer being located adjacent said first zone and said second layer being located adjacent said second zone, and which is characterized in that said first and said second layer are made of a nonwoven material with a density of from 5 to 125 kg/m$^3$ according to claim 1. In a preferred embodiment, characterized in that the density of the nonwoven material is from 5 to 25 kg/m$^3$, i.e. the nonwoven material is a highloft material.

Furthermore, a nonwoven material is preferred which has not been produced via a stitch-bonding process.

It has surprisingly been found that by employing at least two nonwoven fibre layers of hygroscopic respectively non-hygroscopic nature instead of an intimate mixture such as proposed in e.g. WO 99/17605, the effects of condensation in the inside of the material can be significantly reduced.

Especially, the insulating material of the present invention may exhibit a condensation zone in which zone, when in use, the temperature is below the dewpoint, and the thickness of said second layer of hygroscopic fibres may be selected so that said second layer at least extends over said condensation zone.

This means that the thickness of the fibre layers is selected such that the second layer of hygroscopic fibres extends into the zone where condensation of moisture is likely to occur due to the climatic difference between the two zones separated by the insulating materials when in use.

Based on the assumption that the temperature gradient between the first zone (having a higher temperature) and the second zone (having a lower temperature) separated by the material when in use, is linear, one can determine the expected condensation zone, i.e. the zone in which condensation is likely to occur, based on the climatic properties (such as temperature and absolute humidity) of the two zones, by way of applying a psychrometric or Mollier chart.

In the case of a duvet, for example, the first zone adjacent to the sleeping body may be assumed to have an average temperature of around 30°C to 35°C, with an absolute humidity of around 15g $H_2O/m^3$ air. The second zone, at the outside of the duvet, may have a room climate with temperatures ranging from 15°C to 10°C and around 8g $H_2O/m^3$ air.

Taking into consideration a duvet with a filling material having a certain thickness, such as e.g. 4 cm, one can determine on the base of the above data, using a Mollier chart, the zone where condensation is likely to occur when the duvet is used.

According to the present invention, the proportion of the thickness of the second (hygroscopic) layer in relation to the overall thickness of the insulating material is then chosen such that, when in use, the hygroscopic layer at least extends over said condensation zone.

In further preferred embodiments, it is possible to define a preferred proportion of the second (hygroscopic) layer in relation to the overall thickness of the insulating material depending on the expected temperature difference between the first and the second zone separated by the material when in use.

Therefore, according to a preferred embodiment of the present invention, the portion y of the thickness of said second layer related to the total thickness of the material fulfils the following formulas:

$$y\ (\%) > 0$$

and

$$y\ (\%) \geq 207.89 - 514.84x^{-0.333},$$

wherein x denotes the difference between said first temperature of the first zone and said second temperature of the second zone, and wherein x ranges from 5 to 80°C.

This range of portions y of the second (hygroscopic) layer will especially be suitable in the case of insulating materials being selected from the group consisting of filling materials for duvets, pillows, sleeping bags, mattresses, quilts and sleepwear.

These materials have in common that they are mostly used during sleeping, where the human body has low activity and, consequently, sweats less, resulting in an absolute humidity in the zone surrounding the body of around 15g $H_2O/m^3$.

If the portion y of the hygroscopic fibre layer in an article according to the invention is selected such that it fits within the above-mentioned formulae, the hygroscopic fibre layer will extend over the expected condensation zone within the article, whereby moisture formed in that zone during use will be absorbed by the hygroscopic fibres.

In another preferred material according to the present invention, said portion y fulfils the following formula:

$$y(\%) \geq 140.88 - 451.25x^{-0.5}.$$

This range of portions y of the second (hygroscopic) layer will especially be suitable in the case of insulating materials being selected from the group consisting of filling materials for everyday's clothing.

Under "everyday's clothing", clothing that is normally worn during the day, as opposed to sportswear, is meant. Examples for everyday's clothing are shirts, trousers, blouses, jackets and the like for everyday's use.

In the field of everyday's clothing which is worn during the day, an absolute humidity of around 20g $H_2O/m^3$ is expected to be present in the zone surrounding the body, due to the higher activity of the body as compared with the activity when sleeping.

If the portion y is selected so that it fits within the above-mentioned formula, the hygroscopic fibre layer will extend over the condensation zone which is likely to occur when the clothing is in daily use.

Finally, in a further preferred embodiment, the insulating material according to the invention is characterized in that said portion y fulfils the following formula:

$$y(\%) \geq 100.34 - 504.27x^{-1}.$$

This range of portions y of the second (hygroscopic) layer will especially be suitable in the case of insulating materials being selected from the group consisting of sportswear.

When practicing sports, the human body exerts a high activity, resulting in a higher relative humidity surrounding the body, assumed to be around 30g $H_2O/m^3$. Therefore, the portion y of the second (hygroscopic) layer in, e.g., sportswear must be higher than that in a sleeping article or everyday's clothing. The above-mentioned formula defines the suitable range of portion y, again depending on the temperature difference between the first and the second zone separated by the insulating material when in use.

The first (non-hygroscopic) layer of the material according to the invention may preferably comprise a fibre material selected from the group consisting of Polyester fibre, glass fibre, mineral rock fibre, Polypropylene fibre, Polyamide fibre, Polyacrylonitrile fibre, Polylactic acid fibre, Polyethylene fibre and mixtures thereof.

The second (hygroscopic) layer of the material according to the invention may preferably comprise a fibre material selected from the group consisting of cotton, ramie, Viscose fibre, Modal fibre, Lyocell fibre, linen, hemp, Kapok, wool, feathers, down, poplar seed hair and mixtures thereof.

Both the first and the second layer may also comprise mixtures of both hygroscopic and non-hygroscopic fibres, respectively, as long as the overall hygroscopic respectively non-hygroscopic nature of the respective layer is retained.

Furthermore, the material of the present invention may comprise more than two layers, such as one or more additional fibre layers, or cover sheets, as long as the thickness of the hygroscopic layer is selected such that it extends over the condensation zone of the material.

The layers of the material of the present invention may be connected to each other by processes known per se in the art, such as by arranging the layers over each other and attaching them together and/or to an outside fabric layer in a known manner.

Both the essentially hygroscopic fibre material and the essentially non-hygroscopic fibre material may comprise modified fibre materials, such as fibres modified in order to possess flame-retardant properties and the like.

The present invention also relates to the use of an insulation material according to the present invention as a filling material for duvets, pillows, sleeping bags, mattresses; as a filling material for clothing, such as for ski and winter wear; as a layer in sports clothing, or as a thermal insulation in buildings (such as for brickwork, roof insulation or window frames) and industrial applications (such as for heating or cooling devices, air conditioning devices, pipework, transportation means, e.g. aeroplanes, cars and trains). An embodiment of the insulating material according to the present invention is selected from the group consisting of filling materials for duvets, pillows, sleeping bags, mattresses, quilts and sleepwear, and is characterized in that the portion y of the thickness of said second layer related to the total thickness of the material is 20% or more, preferably 20% to 50%. This range of portion y will cover most materials wherein the activity of the body is low and the temperature difference between the zone surrounding the body and the zone outside the material is from about 20°C to 35°C.

A further embodiment of the insulating material according to the present invention is selected from the group consisting of sleeping bags, and is characterized in that the portion y of the thickness of said second layer related to the total thickness of the material is 40% or more, preferably 50% to 90%. This range of portion y will especially cover sleeping bags suitable even for very low temperatures, where the temperature difference between the zone surrounding the body and the zone outside the material may be as high as 35°C to 80°C.

A further embodiment of the insulating material according to the present invention is selected from the group consisting of ski and winter wear, especially winter coats, winter trousers, anoraks, winter jackets and high altitude climbing wear, and is characterized in that the portion y of the thickness of said second layer related to the total thickness of the material is 60% or more, preferably 75% to 85%. This range of portion y will cover most materials suitable for use even at low temperatures, with medium to high activity of the body, and the temperature difference between the zone surrounding the body and the zone outside the material ranging up to about 30°C to 70°C.

Finally, a further embodiment of the insulating material according to the present invention selected from the group consisting of sports wear, and is characterized in that the portion y of the thickness of said second layer related to the total thickness of the material is 70% or more, preferably 80% to 95%. This range of portion y will cover most sports wear applications, with high activity of the body, and the temperature difference between the zone surrounding the body and the zone outside the material ranging from about 20°C to 60°C or even more.

The present invention will now be described in more detail by way of the figures and the examples.

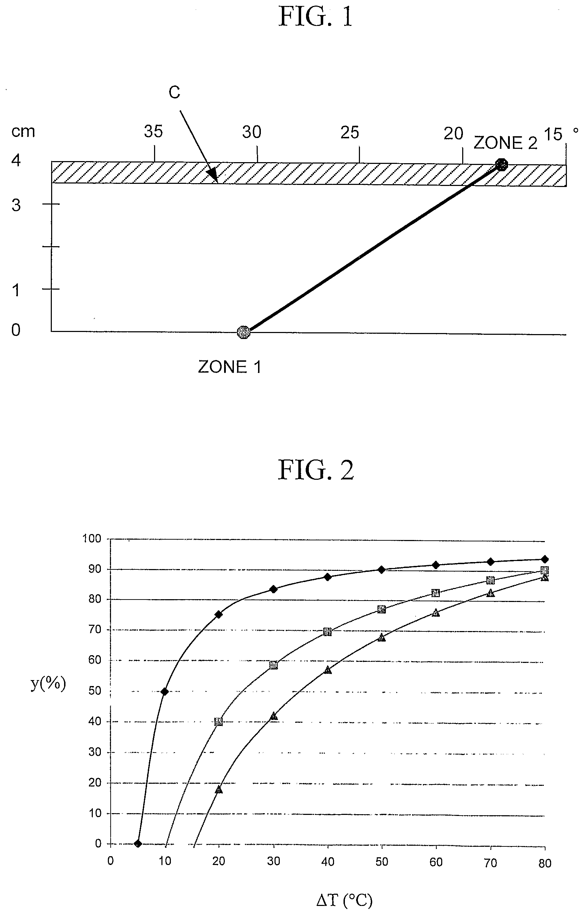

Thereby, Figure 1 shows schematically the temperature gradient in a duvet.

Figure 2 shows the curves for suitable ranges of the portion y of the thickness of the hygroscopic fibre layer related to the total thickness of the material according to the invention, depending on the application area (body activity) and the temperature difference between the first zone (surrounding the body) and the second zone.

According to Figure 1, a duvet with a filling of 100% Polyester fibre may exhibit a typical thickness of 4 cm. When in use, the duvet will separate two zones, indicated in Figure 1 as "ZONE 1" and "ZONE 2".

ZONE 1, the sleeping zone, is the zone where the sleeping body is in contact with the first surface of the duvet. In the example according to Figure 1, the temperature in this zone is 30.7°C, and the absolute humidity is 14.5g $H_2O/m^3$ air.

ZONE 2 is the air at the outer side of the duvet. In the example according to Figure 1, the climate of this zone is a room climate with 18°C and 7.7g $H_2O/m^3$ air.

Based on the assumption that the temperature gradient between ZONE 1 and the ZONE 2 is linear, one can determine the expected condensation zone, i.e. the zone in which condensation is likely to occur, based on the given climatic properties (such as temperature and absolute humidity) by way of applying a psychrometric or Mollier chart.

Thus, it is shown that in the duvet according to Figure 1, given the climatic properties of ZONE 1 and ZONE 2, at a distance of about 3.5 cm away from the surface adjacent to the sleeping body, the temperature will be below the dewpoint, whereby a zone is formed wherein condensation may occur (the hatched zone denoted with "C").

If, according to the preferred embodiment of the present invention, the duvet filling consists of two layers, one layer made of 100% Polyester fibre and being located adjacent ZONE 1, and the second layer made of 100% Lyocell fibre and being located adjacent ZONE 2, and if the thickness of said second layer extends at least over said condensation zone C, then water that is condensed in said zone will be absorbed by the hygroscopic Lyocell fibres, and the formation of moisture in the duvet filling can be avoided.

Figure 2 demonstrates the preferred ranges of the portion y of the thickness of the second layer of essentially hygroscopic fibre material according to the present invention:

The abscissa in Figure 2 denotes the difference in temperature ($\Delta$T in °C) between the first zone and the second zone which are separated by the insulating material, such as the skin of the human body and the outside climate in the case of clothing.

The ordinate denotes the portion y(%) of the thickness of the layer of hygroscopic fibre material.

Depending on the amount of body activity involved when using the insulating material, three preferred ranges can be identified:

If the activity of the human body is very high, such as when practicing sports, then the body will sweat, resulting in a high absolute humidity at the body-adjacent side of the insulating material of around 30g $H_2O/m^3$. In this case, depending on the difference between the temperature at the body-adjacent side (which may be around 30-35°C) and the outside temperature (which may be less than 0°C), the portion y of the thickness of the hygroscopic layer should be at least as high as the value defined by the left-most curve shown in Figure 2 (-♦-♦-♦-♦-), which can be fitted by the equation $y(\%) \geq 100.34 - 504.27x^{-1}$.

If the insulating material is to be used in situations of medium body activity, such as in everyday's clothing, resulting in a medium absolute humidity at the body-adjacent side of the insulating material of around 20g $H_2O/m^3$, it is found that the portion y of the thickness of the hygroscopic layer should be at least as high as the value defined by the curve in the middle of the three curves in Figure 2 (-■-■-■-■-), which can be fitted by the equation $y(\%) \geq 140.88 - 451.25x^{-0.5}$.

Finally in applications with a low body activity, such as in bedding articles, where the absolute humidity at the body-adjacent side of the insulating material may be around only 15g $H_2O/m^3$, it is found that the portion y of the thickness of the hygroscopic layer should be at least as high as the value defined by the right-most curve in Figure 2 (-▲-▲-▲-▲), which can be fitted by the equation $y(\%) \geq 207.89 - 514.84x^{-0.333}$.

The single points defining the three curves were each determined by investigating, based on the humidity and temperature conditions given and based on a linear temperature gradient within the material, the distance from the body-adjacent surface of the insulating material where the temperature reaches a value lower than the respective dewpoint, on the basis of a common psychrometric/Mollier chart.

## Claims

1. An insulating material selected from the group consisting of filling materials for duvets, pillows, mattresses, quilts, sleeping bags, ski and winter wear and sports wear, comprising a first surface and a second surface, said first surface, when in use, being in contact with a first zone having a first temperature and a first absolute humidity, and said second surface, when in use, being in contact with a second zone having a second temperature which is lower than the first temperature and having a second absolute humidity which may be different from said first absolute humidity, said material comprising a first layer of a non-hygroscopic fibre material and a second layer of a hygroscopic fibre material, said first layer being located adjacent said first zone and said second layer being located adjacent said second zone, wherein said first layer comprises a fibre material selected from the group consisting of Polyester fibre, Polypropylene fibre, Polyamide fibre, Polyacrylonitrile fibre, Polylactic acid fibre, Polyethylene fibre and mixtures thereof and wherein said second layer comprises a fibre material selected from the group consisting of cotton, ramie, Viscose fibre, Modal fibre, Lyocell fibre, linen, hemp, Kapok, and mixtures thereof, **characterized in that** said first and said second layer are made of a nonwoven material with a density of from 5 to 125 kg/m$^3$, wherein the portion y of the thickness of said second layer related to the total thickness of the material fulfils the following criteria:

   - if the insulating material is selected from the group consisting of filling materials for duvets, pillows, mattresses and quilts, the portion y of the thickness of said second layer related to the total thickness of the material is 20% or more, preferably 20% to 50%
   - if the insulating material is selected from the group consisting of sleeping bags, the portion y of the thickness of said second layer related to the total thickness of the material is 40% or more, preferably 50% to 90%
   - if the insulating material is selected from the group consisting of ski and winter wear, especially winter coats, winter trousers, anoraks, winter jackets and high altitude climbing wear, the portion y of the thickness of said second layer related to the total thickness of the material is 60% or more, preferably 75% to 85% and
   - if the insulating material is selected from the group consisting of sports wear, the portion y of the thickness of said second layer related to the total thickness of the material is 70% or more, preferably 80% to 95%.

2. Insulating material according to claim 1, **character-**

**ized in that** the density of the nonwoven material is from 5 to 25 kg/m$^3$.

## Patentansprüche

1. Isolationsmaterial, ausgewählt aus der Gruppe bestehend aus Füllmaterialien für Bettdecken, Kissen, Matratzen, Steppdecken, Schlafsäcke, Ski- und Winterbekleidung und Sportkleidung, umfassend eine erste Oberfläche und eine zweite Oberfläche, wobei die erste Oberfläche bei Verwendung mit einem ersten Bereich in Kontakt steht, der eine erste Temperatur und eine erste absolute Feuchtigkeit aufweist, und die zweite Oberfläche bei Verwendung mit einem zweiten Bereich in Kontakt steht, der eine zweite Temperatur, die niedriger als die erste Temperatur ist, und eine zweite absolute Feuchtigkeit, die sich von der ersten absoluten Feuchtigkeit unterscheiden kann, aufweist, wobei das Material eine erste Schicht aus einem nicht-hygroskopischen Fasermaterial und eine zweite Schicht aus einem hygroskopischen Fasermaterial umfasst, wobei die erste Schicht angrenzend an den ersten Bereich und die zweite Schicht angrenzend an den zweiten Bereich lokalisiert ist, wobei die erste Schicht ein Fasermaterial umfasst ausgewählt aus der Gruppe bestehend aus Polyesterfaser, Polypropylenfaser, Polyamidfaser, Polyacrylonitrilfaser, Polyessigsäurefaser, Polyethylenfaser und Mischungen davon und wobei die zweite Schicht ein Fasermaterial umfasst ausgewählt aus der Gruppe bestehend aus Baumwolle, Ramie, Viscosefaser, Modal-Faser, Lyocell-Faser, Leinen, Hanf, Kapok und Mischungen davon, **dadurch gekennzeichnet, dass** die erste und die zweite Schicht aus einem Vliesmaterial mit einer Dichte von 5 bis 125 kg/m$^3$ gefertigt sind, wobei der Anteil y der Dicke der zweiten Schicht in Bezug auf die Gesamtdicke des Materials die folgenden Kriterien erfüllt:

     - wenn das isolierende Material aus der Gruppe bestehend aus Füllmaterialien für Bettdecken, Kissen, Matratzen und Steppdecken ausgewählt ist, beträgt der Anteil y der Dicke der zweiten Schicht in Bezug auf die Gesamtdicke des Material 20% oder mehr, vorzugsweise 20 bis 50%
     - wenn das isolierende Material aus der Gruppe bestehend aus Schlafsäcken ausgewählt ist, beträgt der Anteil y der Dicke der zweiten Schicht bezogen auf die Gesamtdicke des Materials 40% oder mehr, vorzugsweise 50% bis 90%
     - wenn das isolierende Material aus der Gruppe bestehend aus Ski- und Winterbekleidung, insbesondere Wintermäntel, Winterhosen, Anoraks, Winterjacken und hochalpine Wanderbekleidung, ausgewählt ist, beträgt der Anteil y der Dicke der zweiten Schicht bezogen auf die Gesamtdicke des Materials 60% oder mehr, vorzugsweise 75% bis 85% und
     - wenn das isolierende Material aus der Gruppe bestehend aus Sportbekleidung ausgewählt ist, beträgt der Anteil y der Dicke der zweiten Schicht in Bezug auf die Gesamtdicke des Materials 70% oder mehr, vorzugsweise 80% bis 95%.

2. Isolationsmaterial gemäß Anspruch 1, **dadurch gekennzeichnet, dass** die Dichte des Vliesmaterials 5 bis 25 kg/m$^3$ beträgt.

## Revendications

1. Matériau isolant sélectionné dans le groupe constitué de matériaux de remplissage pour couettes, oreillers, matelas, édredons, sacs de couchage, vêtements de ski et d'hiver et vêtements de sports, comprenant une première surface et une seconde surface, ladite première surface, lors de l'utilisation, étant en contact avec une première zone ayant une première température et une première humidité absolue, et ladite seconde surface, lors de l'utilisation, étant en contact avec une seconde zone ayant une seconde température qui est inférieure à la première température et ayant une seconde humidité absolue qui peut être différente de ladite première humidité absolue, ledit matériau comprenant une première couche d'un matériau à fibres non hygroscopiques et une seconde couche d'un matériau à fibres hygroscopiques, ladite première couche étant disposée de manière adjacente à ladite première zone et ladite seconde couche étant disposée de manière adjacente à ladite seconde zone, dans lequel ladite première couche comprend un matériau à fibres sélectionné dans le groupe constitué de fibre de polyester, de fibre de polypropylène, de fibre de polyamide, de fibre de polyacrylonitrile, de fibre d'acide polylactique, de fibre de polyéthylène et de mélanges de celles-ci et dans lequel ladite seconde couche comprend un matériau à fibres sélectionné dans le groupe constitué de coton, de ramie, de fibre de viscose, de fibre de modal, de fibre de lyocell, de lin, de chanvre, de Kapok, et de mélanges de ceux-ci, **caractérisé en ce que** lesdites première et seconde couches se composent d'un matériau non tissé ayant une densité de 5 à 125 kg/m$^3$, dans lequel la partie y de l'épaisseur de ladite seconde couche par rapport à l'épaisseur totale du matériau répond aux critères suivants :

     - si le matériau isolant est sélectionné dans le groupe constitué de matériaux de remplissage pour couettes, oreillers, matelas et édredons, la partie y de l'épaisseur de ladite seconde couche par rapport à l'épaisseur totale du matériau est de 20 % ou plus, de préférence de 20 % à 50 %

- si le matériau isolant est sélectionné dans le groupe constitué de sacs de couchage, la partie y de l'épaisseur de ladite seconde couche par rapport à l'épaisseur totale du matériau est de 40 % ou plus, de préférence de 50 % à 90 %

- si le matériau isolant est sélectionné dans le groupe constitué de vêtements de ski et d'hiver, en particulier de manteaux d'hiver, de pantalons d'hiver, d'anoraks, de blousons d'hiver et de vêtements d'escalade en haute altitude, la partie y de l'épaisseur de ladite seconde couche par rapport à l'épaisseur totale du matériau est de 60 % ou plus, de préférence de 75 % à 85 % et

- si le matériau isolant est sélectionné dans le groupe constitué de vêtements de sport, la partie y de l'épaisseur de ladite seconde couche par rapport à l'épaisseur totale du matériau est de 70 % ou plus, de préférence de 80 % à 95 %.

2. Matériau isolant selon la revendication 1, **caractérisé en ce que** la densité du matériau non tissé fait de 5 à 25 kg/m$^3$.

# FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9916705 A
- DE 4445085 A1
- EP 1067227 A
- WO 9917605 A

**Non-patent literature cited in the description**

- **HOLIDAY, TH.M.** Highloft Nonwovens Handbook. INDA, 1989
- **W. FRITSCHE.** Processing trials with lyocell fibers using the stitch-bonding technique. *Melliand International,* 1997, vol. 2, 80 ff